# EUROPEAN PATENT SPECIFICATION

(11) **EP 2 765 471 B1**
(45) Date of publication and mention of the grant of the patent: **13.04.2016**
(21) Application number: 13154342.3
(22) Date of filing: 07.02.2013
(51) Int. Cl.: G05D 16/16, F16K 1/20, F16K 17/34, G05D 16/10

(54) **A pressure regulator valve including a safety valve, a tap and a cylinder comprising such a valve**
Druckreglerventil mit Sicherheitsventil, Hahn und Zylinder mit einem derartigen Ventil
Soupape de régulation de pression munie d'une soupape de sécurité, robinet et cylindre munis d'une telle soupape

(43) Date of publication of application: 13.08.2014
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: Bendazzoli, Silvano, 37134 Verona (IT); Ferronato, Luca, 37139 Verona (IT); Pezzo, Ivan, 37036 San Martino Buon Albergo (IT); Travagliati, Lucia, 37126 Verona (IT)
(74) Representative: De Cuenca, Emmanuel Jaime

(56) References cited:
- EP-A1- 1 734 295
- WO-A1-2013/068747
- WO-A1-2013/090458
- DE-A1- 3 532 592
- DE-A1-102007 013 152
- US-A- 4 655 246
- US-A- 4 791 956
- US-A1- 2009 078 321

## Description

The present invention concerns a pressure regulator valve including a safety valve, a tap and a cylinder comprising such a valve.

The present invention concerns in particular a pressure regulator valve including a safety valve, in particular for pressurized gas cylinder tap, the pressure regulator valve comprising a body enclosing a gas passage, the gas passage comprising an upstream end and a downstream end, a regulator piston mobile along a longitudinal direction in the gas passage with respect to a piston seat between a first and upstream position wherein a first end of the regulator piston closes the gas passage and a second position wherein said first end of the regulator piston opens the gas passage, the regulator piston comprising a internal gas conduit comprising an upstream end receiving gas flowing from the open piston seat and a downstream end connected to a working chamber closed by a second end of the regulator piston, the pressure regulator valve comprising a return spring generating an effort on the regulator piston which is opposite to the effort generated by the gas pressure in the working chamber on the regulator piston, the safety valve comprising an obturator mobile on the regulator piston between a first position closing a gas exit and second position opening the gas exit, the obturator being urged toward its first position by the return spring of the regulator piston.

Pressure regulator valves are often used in industrial or medical gas applications. Those pressure regulator valves may be integrated or connected to pressurized gas cylinder taps.

Typically, these pressure regulator valves contain a safety valve in the low pressure chamber. The safety valve (which is a kind of pressure relief valve) is a device suitable to protect the pressure regulator in the reduction chamber from overpressure. This safety valve opens automatically for allowing the gas to escape to the outside or through a suitable funnel at a given pressure magnitude.

In known arrangements, the compactness of the valve cannot be obtained without reducing the length available for the return spring of the regulator.

In addition, known arrangement may have continuous safety valve openings due to pressure peaks during opening transient. A sudden pressure peak inside the valve can be normally generated by the pressure regulator valve itself during the upstream ON/OFF system opening. Unfortunately, known arrangements may introduce a further problem in the piston movement (the regulator piston being mechanically linked to a chain of three components instead of two which would increase the risk of piston seizure).

Document US 4,655,246 A discloses a pressure regulator according to the preamble of claim 1.

One objective of the present invention is to solve at least partially one of the problems above mentioned.

To this goal, the pressure regulator valve is defined by characterizing part of claim 1.

Furthermore, embodiments might include on or several of the features below:
- the return spring and the obturator are mounted concentrically around the regulator piston,
- in its first position the obturator is urged downstream against the second end of the regulator piston,
- the upstream end of the regulator piston is oblong shaped and mobile into a tubular wall extending from the body around the piston seat toward downstream in the longitudinal direction, the return spring being mounted concentrically around said tubular wall,
- the upstream end of the regulator piston comprises a first seal in dynamic sealing engagement with the tubular wall, the upstream end of the internal conduit being located between the piston seat and said first seal,
- the gas exit comprises an opening formed through the regulator piston and connecting the internal passage to an orifice located in the body of the pressure regulator valve, in its first position the mobile obturator closing the fluid connection between the opening and the orifice,
- the downstream end of gas passage is located into the working chamber,
- the return spring generates an effort on regulator piston toward the downstream direction,
- the obturator and/or the regulator piston comprise at least a seal for a sealing contact between the obturator and the regulator piston for closing the gas exit when the obturator is in its first position,
- the obturator and the regulator piston comprise each at least a seal for a sealing contact between the obturator and the regulator piston for closing the gas exit when the obturator is in its first position,
- the downstream end of the tubular wall is an upstream stop abutment for the obturator in its second position,
- the longitudinal section of the regulator piston has a "T" shape, the head of the "T" consisting in the second end of the regulator piston.

The invention may also concern a pressurized gas cylinder tap comprising a body including a mounting end for attachment in the opening of a pressurized fluid cylinder, a internal withdrawing circuit comprising a first upstream end located at the mounting end and a second downstream end located at a outlet port located on the body, the withdrawing circuit comprising a pressure regulator valve, wherein the pressure regulator valve is conform to any of the aboce or below features.

The invention may also concern a pressurized gas cylinder comprising a pressurized gas cylinder tap according to the above or below features.

The invention may also concern any device or method comprising any combination of features below of above mentioned.

Other features and advantages will be apparent to the reading of the below description, made with reference to the drawings wherein:
- figure 1 depicts a longitudinal cut view of a possible example of pressure regulator valve according to the invention in a normal situation (safety valve closed),
- figure 2 depicts a longitudinal cut view of the pressure regulator valve of figure 1 in an abnormal situation (safety valve open),
- figure 3 depicts schematically a possible structure of the internal circuit of the cylinder valve embodying the invention and mounted on a cylinder.

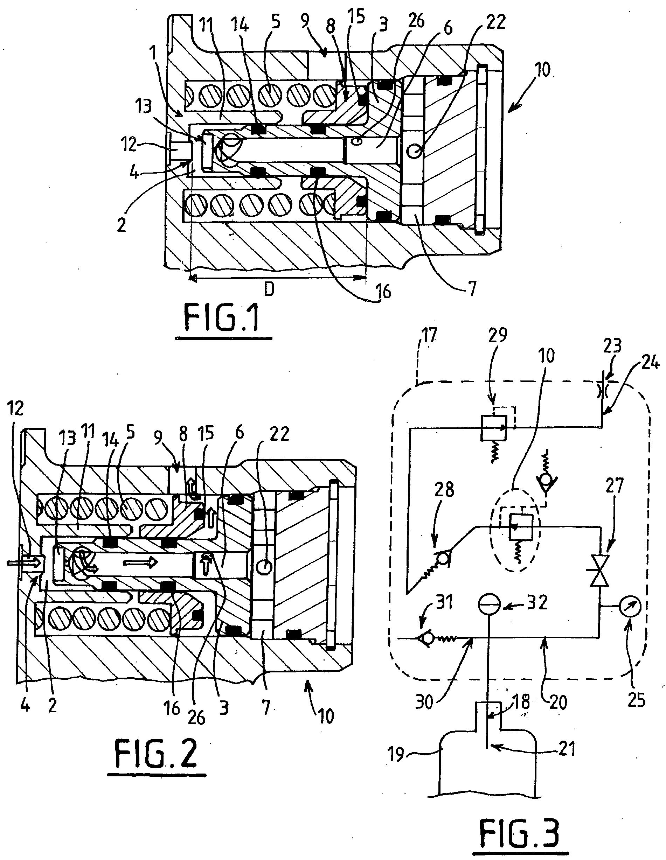

The pressure regulator valve 10 shown on figures 1 and 2 comprises a body 1 containing a gas passage 2. The gas passage 2 comprises an upstream end 12 (inlet) and a downstream end 22 (outlet). Between the upstream end 12 and the downstream end 22 the regulator comprises a regulator piston 3 mobile in the gas passage 2. The regulator piston 3 is mobile in translation along a longitudinal direction with respect to a piston seat 4 between a first and upstream position wherein a first end 13 of the regulator piston 3 closes the gas passage 2 and a second position wherein said first end 13 of the regulator piston 3 opens the gas passage 2.

As disclosed, the upstream end 13 of the regulator piston may comprise a seal comprising rubber or plastic or any suitable material for closing the gas passage without any leak.

The regulator piston 3 comprises an internal gas conduit 6 comprising an upstream end receiving gas flowing from the open piston seat 4 and a downstream end connected to a working chamber 7 closed by a second end of the regulator piston 3.

For example, the longitudinal section of the regulator piston 3 may have a "T" shape, the head of the "T" consisting in the second end of the regulator piston 3. The gas conduit 6 may be longitudinal and the upstream end of the gas conduit may comprise a transversal inlet opening through the regulator piston 3. The downstream end 22 of gas passage 2 is located into the working chamber 7.

The oblong upstream end of the regulator piston 3 is mobile into a tubular wall 11 extending from the body 1 around the piston seat 4 toward downstream in the longitudinal direction.

Preferably, the upstream end of the regulator piston 3 comprises a first seal 14 (for example an o-ring seal) in dynamic sealing engagement with the tubular wall 11. The upstream end of the internal conduit 6 is located between the piston seat 4 and said first seal 14.

The pressure regulator valve 10 comprises a return spring 5 generating an effort on the regulator piston 3 urging the regulator piston 3 toward downstream (toward the second open position). This effort is opposite to the effort generated on the regulator piston 3by the gas increasing pressure in the working chamber 7.

The equilibrium of those two opposite efforts creates a gas pressure lowering between the upstream 12 and downstream 22 ends.

The safety valve comprises an obturator 8 mobile on the regulator piston 3 between a first position closing a gas exit 26, 9 and second position closing the gas exit 26, 9.

The return spring 5 and the obturator 8 are mounted concentrically around the regulator piston 3 in a cavity of the body 1 containing the gas passage 2. Preferably, the upstream end of the return spring 5 (preferably a compression spring) is in contact with the body 1 whereas the downstream end of the return spring 5 is in contact with the obturator 8. More precisely, the return spring 5 pushes the obturator 8 against the second end of the regulator piston 3 (in its first position).

The return spring 5 is mounted concentrically around said tubular wall 11.

The obturator 8 is thus urged toward this first position by the return spring 5.

According to this arrangement, the return spring 5 and the obturator 8 are located in a cavity of the body 1 containing the regulator piston and gas passage 2. The return spring 5 and the obturator 8 extend concentrically around the regulator piston 3 in the longitudinal direction on a distance included between 90% to 130% of the distance (D) from the second end of the regulator piston 3 to the piston seat 4.

This feature permits a relative compact mechanism and, at the same time, a relative long longitudinal dimension available for the return spring 5 as compared to the prior art. This allows the use of a longer spring 5 with the same body 1 dimensions or, alternatively, a reduced body 1 dimension with the same spring length.

The gas exit 26, 9 in case of overpressure in the gas passage 2 comprises an opening 26 formed through the regulator piston 3 and connecting the internal passage 6 to an orifice 9 located in the body 1 of the pressure regulator valve. In its first (downstream) position the mobile obturator 8 closes the fluid connection between the opening 26 and the orifice 9.

This closure is obtained via a first seal 16 (typically an o-ring) on the regulator piston 3 in sealing contact with the obturator 8 and a second seal 15 (typically an o-ring) in sealing contact with the second end of the regulator piston 3. In this first position, the gas exit 26, 9 is closed.

When the pressure in the gas conduit 2 exceeds a predetermined value, the gas pushes the obturator 8 toward upstream against the return spring 5 effort. The obturator 8 slides upstream relatively to the regulator piston 3. This removes the sealing contact of the obturator 8 on the second end of the regulator piston 3 and allows the gas escaping via the exit 26, 9 before reaching the working chamber 7 (as illustrated by the arrows on figure 2).

This arrangement limits the risk of seizure at only two elements (body and piston).

In addition, this prevents safety valve shots during the ON/OFF opening pressure peaks.

As disclosed on figure 3, this pressure regulator valve 10 may be used in the withdrawing circuit 20 of a pressurized gas cylinder tap mounted on a pressurized gas cylinder 19.

The tap illustrated at figure 3 comprises a body 17 including a mounting end 18 for removable attachment in the opening of a pressurized fluid cylinder 19. The body includes an internal withdrawing circuit 20 comprising a first upstream end 21 located at the mounting end 18 and a second downstream end 23 located at a outlet port 24 located on the body 17. The exemplified withdrawing circuit 20 comprises in series from upstream to downstream: a manometer 27, a first pressure regulator valve 10, a residual pressure valve 28, a second pressure regulator valve 29. At least one of the pressure regulator valves 10, 29 may be of the type disclosed above. In addition, the tap may comprise a separate filling circuit 30 with a filling valve 31. The body 17 may include a burst disc 32 shared by both filling and withdrawing circuits 30, 20.

## Claims

1. A pressure regulator valve including a safety valve, in particular for pressurized gas cylinder tap, the pressure regulator valve (10) comprising a body (1) enclosing a gas passage (2), the gas passage (2) comprising an upstream end (12) and a downstream end (22), a regulator piston (3) mobile along a longitudinal direction in the gas passage (2) with respect to a piston seat (4) between a first and upstream position wherein a first end (13) of the regulator piston (3) closes the gas passage (2) and a second position wherein said first end (13) of the regulator piston (3) opens the gas passage (2), the regulator piston (3) comprising a internal gas conduit (6) comprising an upstream end receiving gas flowing from the open piston seat (4) and a downstream end connected to a working chamber (7) closed by a second end of the regulator piston (3), the pressure regulator valve (10) comprising a return spring (5) generating an effort on the regulator piston (3) which is opposite to the effort generated by the gas pressure in the working chamber (7) on the regulator piston (3), the safety valve comprising an obturator (8) mobile on the regulator piston (3) between a first position closing a gas exit (16, 9) and second position opening the gas exit (26, 9), the obturator (8) being urged toward its first position by the return spring (5) of the regulator piston (3), the return spring (5) and the obturator (8) being located in a cavity of the body (1), the return spring (5) and the obturator (8) being mounted concentrically around the regulator piston (3), **characterized in that** the return spring (5) and the obturator (8) extend in the longitudinal direction on a distance included between 90% to 130% of the distance (D) from the second end of the regulator piston (3) to the piston seat (4) and **in that** in its first position the obturator (8) is urged downstream against the second end of the regulator piston (3)

2. A pressure regulator valve according to claim 1, wherein the upstream end of the regulator piston (3) is oblong shaped and mobile into a tubular wall (11) extending from the body (1) around the piston seat (4) toward downstream in the longitudinal direction, the return spring (5) being mounted concentrically around said tubular wall (11).

3. A pressure regulator valve according to claim 2, wherein the upstream end of the regulator piston (3) comprises a first seal (14) in dynamic sealing engagement with the tubular wall (11), the upstream end of the internal conduit (6) being located between the piston seat (4) and said first seal (4).

4. A pressure regulator valve according to any of claims 1 to 3, wherein the gas exit (26, 9) comprises an opening (26) formed through the regulator piston (3) and connecting the internal passage (6) to an orifice (9) located in the body (1) of the pressure regulator valve, in its first position the mobile obturator (8) closing the fluid connection between the opening (26) and the orifice (9).

5. A pressure regulator valve according to any of claims 1 to 4, wherein the downstream end (22) of gas passage (2) is located into the working chamber (7).

6. A pressure regulator valve according to any of claims 1 to 5, wherein the return spring (5) generates an effort on regulator piston (3) toward the downstream direction.

7. A pressure regulator valve according to any of claims 1 to 6, wherein the obturator (8) and/or the regulator piston (3) comprise at least a seal (15, 16) for a sealing contact between the obturator (8) and the regulator piston (3) for closing the gas exit (26, 9) when the obturator (8) is in its first position.

8. A pressure regulator valve according to any of claims 1 to 7, wherein the obturator (8) and the regulator piston (3) comprise each at least a seal (15, 16) for a sealing contact between the obturator (8) and the regulator piston (3) for closing the gas exit (26, 9) when the obturator (8) is in its first position.

9. A pressure regulator valve according to any of claims 1 to 8, wherein the downstream end of the tubular wall (11) is an upstream stop abutment for the obturator (8) in its second position.

10. A pressure regulator valve according to any of claims 1 to 9, wherein the longitudinal section of the regulator piston (3) has a "T" shape, the head of the "T" consisting in the second end of the regulator piston (3).

11. A pressurized gas cylinder tap comprising a body (17) including a mounting end (18) for attachment in the opening of a pressurized fluid cylinder (19), a internal withdrawing circuit (20) comprising a first upstream end (21) located at the mounting end (18) and a second downstream end (23) located at a outlet port (24) located on the body (17), the withdrawing circuit (20) comprising a pressure regulator valve (10), **characterized in that** the pressure regulator valve (10) is conform to any of claims 1 to 10.

12. A pressurized gas cylinder comprising a pressurized gas cylinder tap according to claim 11.

## Patentansprüche

1. Druckregelventil mit einem Sicherheitsventil, speziell für den Hahn einer unter Druck stehenden Gasflasche, wobei das Druckregelventil (10) ein Gehäuse (1) umfasst, das einen Gasdurchgang (2) einschließt, wobei der Gasdurchgang (2) ein vorgelagertes Ende (12) und ein nachgelagertes Ende (22) umfasst, einen Regelkolben (3), der im Gasdurchgang (2) in eine Längsrichtung im Verhältnis zu einem Kolbensitz (4) zwischen einer ersten und vorgelagerten Position, in der ein erstes Ende (13) des Regelkolbens (3) den Gasdurchgang (2) verschließt, und einer zweiten Position bewegt werden kann, in der das besagte erste Ende (13) des Regelkolbens (3) den Gasdurchgang (2) öffnet, wobei der Regelkolben (3) eine interne Gasleitung (6) umfasst, die ein vorgelagertes Ende zum Empfang der Gasströmung aus dem offenen Kolbensitz (4) und ein nachgelagertes Ende umfasst, das mit einem Arbeitsraum (7) verbunden ist, der durch ein zweites Ende des Regelkolbens (3) verschlossen wird, wobei das Druckregelventil (10) eine Rückholfeder (5) umfasst, die eine Kraft auf den Regelkolben (3) ausübt, die jener Kraft entgegenwirkt, die durch den Gasdruck im Arbeitsraum (7) auf den Regelkolben (3) ausgeübt wird, wobei das Sicherheitsventil einen Obturator (8) umfasst, der am Regelkolben (3) zwischen einer ersten Position, in der ein Gasauslass (16, 9) verschlossen wird, und einer zweiten Position bewegt werden kann, in der der Gasauslass (26, 9) geöffnet wird, wobei der Obturator (8) durch die Rückholfeder (5) des Regelkolbens (3) in seine erste Position gedrückt wird, wobei die Rückholfeder (5) und der Obturator (8) in einer Ausnehmung des Gehäuses (1) angeordnet sind, und die Rückholfeder (5) und der Obturator (8) konzentrisch um den Regelkolben (3) herum angebracht sind, **dadurch gekennzeichnet, dass** sich die Rückholfeder (5) und der Obturator (8) in die Längsrichtung in einem Abstand zwischen 90% und 130% des Abstands (D) vom zweiten Ende des Regelkolbens (3) bis zum Kolbensitz (4) erstrecken, und dadurch, dass der Obturator (8) in seiner ersten Position in nachgelagerter Richtung zum zweiten Ende des Regelkolbens (3) gedrückt wird.

2. Druckregelventil nach Anspruch 1, wobei das vorgelagerte Ende des Regelkolbens (3) länglich ausgeformt ist und in einer rohrförmigen Wand (11) bewegt werden kann, die sich vom Gehäuse (1) um den Kolbensitz (4) in nachgelagerter Längsrichtung erstreckt, wobei die Rückholfeder (5) konzentrisch um die besagte rohrförmige Wand (11) herum angebracht ist.

3. Druckregelventil nach Anspruch 2, wobei das vorgelagerte Ende des Regelkolbens (3) eine erste Dichtung (14) in einer dynamischen Dichtanordnung mit der rohrförmigen Wand (11) umfasst, wobei sich das vorgelagerte Ende der internen Leitung (6) zwischen dem Kolbensitz (4) und der besagten ersten Dichtung (4) befindet.

4. Druckregelventil nach irgendeinem der Ansprüche 1 bis 3, wobei der Gasauslass (26, 9) eine Öffnung (26) umfasst, die durch den Regelkolben (3) hindurch gebildet wird, und den internen Durchgang (6) mit einer Öffnung (9) verbindet, die sich im Gehäuse (1) des Druckregelventils befindet, wobei der bewegliche Obturator (8) in seiner ersten Position die Fluidverbindung zwischen der Öffnung (26) und der Öffnung (9) verschließt.

5. Druckregelventil nach irgendeinem der Ansprüche 1 bis 4, wobei sich das nachgelagerte Ende (22) des Gasdurchgangs (2) im Arbeitsraum (7) befindet.

6. Druckregelventil nach irgendeinem der Ansprüche 1 bis 5, wobei die Rückholfeder (5) auf den Regelkolben (3) eine Kraft in nachgelagerter Richtung ausübt.

7. Druckregelventil nach irgendeinem der Ansprüche 1 bis 6, wobei der Obturator (8) und/ oder der Regelkolben (3) zumindest eine Dichtung (15, 16) zum Abdichten des Kontakts zwischen dem Obturator (8) und dem Regelkolben (3) umfassen, um den Gasauslass (26, 9) zu schließen, wenn sich der Obturator (8) in seiner ersten Position befindet.

8. Druckregelventil nach irgendeinem der Ansprüche 1 bis 7, wobei der Obturator (8) und der Regelkolben (3) jeweils zumindest eine Dichtung (15, 16) zum Abdichten des Kontakts zwischen dem Obturator (8) und dem Regelkolben (3) umfassen, um den Gasauslass (26, 9) zu schließen, wenn sich der Obturator (8) in seiner ersten Position befindet.

9. Druckregelventil nach irgendeinem der Ansprüche 1 bis 8, wobei das nachgelagerte Ende der rohrförmigen Wand (11) ein vorgelagerter Stoppanschlag für den Obturator (8) in dessen zweiter Position ist.

10. Druckregelventil nach irgendeinem der Ansprüche 1 bis 9, wobei der Längsschnitt des Regelkolbens (3) eine "T"-Form aufweist, wobei der Kopf des "T" aus dem zweiten Ende des Regelkolbens (3) besteht.

11. Hahn einer unter Druck stehenden Gasflasche, ein Gehäuse (17) inklusive eines Befestigungsendes (18) zum Befestigen in der Öffnung einer unter Druck stehenden Fluidflasche (19) umfassend, sowie einen internen Abnahmekreis (20), ein erstes vorgelagertes Ende (21) umfassend, das sich am Befestigungsende (18) befindet, und ein zweites nachgelagertes Ende (23), das sich an einer Auslassöffnung (24) befindet, die am Gehäuse (17) angeordnet ist, wobei der Abnahmekreis (20) ein Druckregelventil (10) umfasst, **dadurch gekennzeichnet, dass** das Druckregelventil (10) irgendeinem der Ansprüche 1 bis 10 entspricht.

12. Unter Druck stehende Gasflasche, einen Hahn für eine unter Druck stehende Gasflasche nach Anspruch 11 umfassend.

## Revendications

1. Soupape de régulation de pression incluant une soupape de sécurité, en particulier pour robinet de bouteille de gaz sous pression, la soupape de régulation de pression (10) comprenant un corps (1) enfermant une passage de gaz (2), le passage de gaz (2) comprenant une extrémité en amont (12) et une extrémité en aval (22), un piston de régulation (3) mobile le long d'une direction longitudinale dans le passage de gaz (2) par rapport à un siège de piston (4) entre une première position, en amont, dans laquelle une première extrémité (13) du piston de régulation (3) ferme le passage de gaz (2) et une seconde position, dans laquelle ladite première extrémité (13) du piston de régulation (3) ouvre le passage de gaz (2), le piston de régulation (3) comprenant un conduit de gaz interne (6) comprenant une extrémité en amont recevant un gaz s'écoulant à partir du siège de piston ouvert (4) et une extrémité en aval raccordée à une chambre de travail (7) fermée par une seconde extrémité du piston de régulation (3), la soupape de régulation de pression (10) comprenant un ressort de rappel (5) générant un effort sur le piston de régulation (3) qui est opposé à l'effort généré par la pression de gaz dans la chambre de travail (7) sur le piston de régulation (3), la soupape de sécurité comprenant un obturateur (8) mobile sur le piston de régulation (3) entre une première position fermant une sortie de gaz (16, 9) et une seconde position ouvrant la sortie de gaz (26, 9), l'obturateur (8) étant poussé vers sa première position par le ressort de rappel (5) du piston de régulation (3), le ressort de rappel (5) et l'obturateur (8) étant situés dans une cavité du corps (1), le ressort de rappel (5) et l'obturateur (8) étant montés concentriquement autour du piston de régulation (3), **caractérisée en ce que** le ressort de rappel (5) et l'obturateur (8) s'étendent dans la direction longitudinale sur une distance incluse entre 90 % et 130 % de la distance (D) de la seconde extrémité du piston de régulation (3) au siège de piston (4) et **en ce que**, dans sa première position, l'obturateur (8) est poussé en aval contre la seconde extrémité du piston de régulation (3)

2. Soupape de régulation de pression selon la revendication 1, dans laquelle l'extrémité en amont du piston de régulation (3) présente une forme oblongue et est mobile dans une paroi tubulaire (11) s'étendant à partir du corps (1) autour du siège de piston (4) vers en aval dans la direction longitudinale, le ressort de rappel (5) étant monté concentriquement autour de ladite paroi tubulaire (11).

3. Soupape de régulation de pression selon la revendication 2, dans laquelle l'extrémité en amont du piston de régulation (3) comprend un premier joint d'étanchéité (14) en prise à étanchéité dynamique avec la paroi tubulaire (11), l'extrémité en amont du conduit interne (6) étant située entre le siège de piston (4) et ledit premier joint d'étanchéité (4).

4. Soupape de régulation de pression selon l'une quelconque des revendications 1 à 3, dans laquelle la sortie de gaz (26, 9) comprend une ouverture (26) formée à travers le piston de régulation (3) et raccordant le passage interne (6) à un orifice (9) situé dans le corps (1) de la soupape de régulation de pression, dans sa première position, l'obturateur mobile (8) fermant le raccord fluidique entre l'ouverture (26) et l'orifice (9).

5. Soupape de régulation de pression selon l'une quelconque des revendications 1 à 4, dans laquelle l'extrémité en aval (22) de passage de gaz (2) est située dans la chambre de travail (7).

6. Soupape de régulation de pression selon l'une quelconque des revendications 1 à 5, dans laquelle le ressort de rappel (5) génère un effort sur le piston de régulation (3) vers la direction en aval.

7. Soupape de régulation de pression selon l'une quelconque des revendications 1 à 6, dans laquelle l'obturateur (8) et/ou le piston de régulation (3) comprennent au moins un joint d'étanchéité (15, 16) pour un contact d'étanchéité entre l'obturateur (8) et le piston de régulation (3) pour fermer la sortie de gaz (26, 9) lorsque l'obturateur (8) est dans sa première position.

8. Soupape de régulation de pression selon l'une quelconque des revendications 1 à 7, dans laquelle l'obturateur (8) et le piston de régulation (3) comprennent chacun au moins un joint d'étanchéité (15, 16) pour un contact d'étanchéité entre l'obturateur (8) et le piston de régulation (3) pour fermer la sortie de gaz (26, 9) lorsque l'obturateur (8) est dans sa première position.

9. Soupape de régulation de pression selon l'une quelconque des revendications 1 à 8, dans laquelle l'extrémité en aval de la paroi tubulaire (11) est une butée d'arrêt en amont pour l'obturateur (8) dans sa seconde position.

10. Soupape de régulation de pression selon l'une quelconque des revendications 1 à 9, dans laquelle la section longitudinale du piston de régulation (3) présente une forme de « T », la tête du « T » consistant en la seconde extrémité du piston de régulation (3).

11. Robinet de bouteille de gaz sous pression comprenant un corps (17) incluant une extrémité de montage (18) pour la fixation dans l'ouverture d'une bouteille à fluide sous pression (19), un circuit de retrait interne (20) comprenant une première extrémité en amont (21) située à l'extrémité de montage (18) et une seconde extrémité en aval (23) située à un orifice de sortie (24) situé sur le corps (17), le circuit de retrait (20) comprenant une soupape de régulation de pression (10), **caractérisé en ce que** la soupape de régulation de pression (10) est selon l'une quelconque des revendications 1 à 10.

12. Bouteille de gaz sous pression comprenant un robinet de bouteille de gaz sous pression selon la revendication 11.
